# EUROPÄISCHE PATENTSCHRIFT

(11) **EP 1 721 375 B1**
(45) Veröffentlichungstag und Bekanntmachung des Hinweises auf die Patenterteilung: **22.06.2011**
(21) Anmeldenummer: 04717017.0
(22) Anmeldetag: 04.03.2004
(51) Int. Cl.: H02H 7/08

(54) **SCHUTZGERÄT FÜR EINEN VERBRAUCHERABZWEIG**
PROTECTIVE DEVICE FOR A CONSUMER BRANCH
DISPOSITIF DE PROTECTION DESTINE A UN BRANCHEMENT DE RECEPTEUR

(43) Veröffentlichungstag der Anmeldung: 15.11.2006
(73) Patentinhaber: SIEMENS AKTIENGESELLSCHAFT, 80333 München (DE)
(72) Erfinder: SEITZ, Johann, 92224 Amberg (DE)
(86) Internationale Anmeldenummer: PCT/DE2004/000422
(87) Internationale Veröffentlichungsnummer: WO 2005/086311

(56) Entgegenhaltungen:
- EP-A- 0 583 762
- EP-A- 0 641 056
- EP-A- 0 827 251
- US-A- 5 822 164

## Beschreibung

Die Erfindung betrifft ein Schutzgerät für einen Verbraucherabzweig.

Verbraucherabzweige werden heute entweder sicherungslos (z.B. mit Leistungsschalter) oder sicherungsbehaftet aufgebaut. Bei beiden Aufbauarten ist es möglich, einen mit mechanischen Schaltgeräten versehenen Verbraucherabzweig so zu schützen, dass die Schaltgeräte nach einem Kurzschluss weiterhin funktionsfähig sind. Dies wird in der dafür zuständigen Produktnorm IEC 947 als "Zuordnungsart 2" bezeichnet. Bei einem sicherungslosen Verbraucherabzweig mit einem elektronischen Schaltgerät wird dieses im Kurzschlussfall ohne eine erhebliche Überdimensionierung des Leistungshalbleiters in der Regel zerstört. Daher kommen bei der Verwendung elektronischer Schaltgeräte zumeist Sicherungen zum Einsatz. Bei einem solchen sicherungsbehafteten Verbraucherabzweig mit einem elektronischen Schaltgerät kann die "Zuordnungsart 2" jedoch nur durch zusätzliche Komponenten erreicht werden, wie beispielsweise spezielle Halbleitersicherungen oder teure Ganzbereichssicherungen. Ein solches Schaltgerät ist aus EP 0583 762 bekannt.

Aufgabe der vorliegenden Erfindung ist es, eine konstruktiv einfache Lösung zu finden, mit der ein umfassender Schutz eines Verbraucherabzweigs erreicht werden kann.

Diese Aufgabe wird durch ein Schutzgerät nach Anspruch 1 bzw. durch eine Anordnung nach Anspruch 7 gelöst. Danach ist ein Schutzgerät mit einem ersten Schutzelement zur Bereitstellung eines Motor- und Leitungsschutzes und mit einem eine Sicherung aufweisenden, integrierten zweiten Schutzelement zur Bereitstellung eines Kurzschlussschutzes vorgesehen.

Erfindungsgemäss ist es vorgesehen, das zweite Schutzelement derart auszubilden, dass zugleich ein Halbleiterschutz für ein im Verbraucherabzweig vorgesehenes elektronisches Schaltgerät besteht. Mit anderen Worten ermöglicht das zweite Schutzelement neben einem Kurzschlussschutz für den gesamten Verbraucherabzweig zugleich auch einen Halbleiterschutz für elektronische Schaltgeräte im Verbraucherabzweig. Dies wird insbesondere durch die Wahl einer geeigneten Sicherung erreicht, welche beispielsweise eine geeignete Überlastfähigkeit für den Motoranlauf und niedrige Stromdurchlasswerte zum Schutz der Halbleiter aufweist. Somit kann auch in Verbindung mit einem elektronischen Schaltgerät die "Zuordnungsart 2" erreicht werden. Zusätzliche Komponenten sind hierfür nicht mehr erforderlich.

Eine Grundidee der Erfindung besteht darin, mehrere Schutzfunktionen in einem einzigen Schutzgerät zusammenzufassen. Mit dem erfindungsgemäßen Schutzgerät werden ein Motor- und Leitungsschutz (Überlastschutz), ein Kurzschlussschutz für den gesamten Verbraucherabzweig und eine Schutzfunktion für die Halbleiterschalter bereitgestellt. Durch eine solche Kombination ist es möglich, den erforderlichen Platzbedarf zu senken. Da keine zusätzlichen Sicherungshalter erforderlich sind, wird die benötigte Schaltschrankfläche verringert. Teure zusätzliche Schutzkomponenten sowie aufwändige Verdrahtungen hierfür sind nicht mehr erforderlich.

Da sämtliche im Schutzgerät vorhandenen Schutzelemente aufeinander abgestimmt sind, können darüber hinaus für Verbraucherabzweige typgeprüfte, optimal aufeinander abgestimmte Schutzgeräte zur Verfügung gestellt werden. Eine separate Projektierung verschiedener Schutzelemente zur Bereitstellung der unterschiedlichen Schutzarten durch den Anwender ist nicht mehr erforderlich. Stattdessen werden sämtliche Schutzfunktionen in einem einzigen Schutzgerät vereint, wobei diese Schutzfunktionen sowohl aufeinander als auch auf die Anforderungen des zu schützenden Abzweigs abgestimmt sind. Die Auswahl des für den jeweiligen Anwendungsfall passenden, einzig erforderlichen Schutzgerätes kann beispielsweise anhand der Motornenndaten erfolgen.

Mit der vorliegenden Erfindung ist es möglich, Schutzgerät und Schaltgerät in ihren Montageabmessungen derart aufeinander abzustimmen, dass sie von ihrer Anschlussbreite, -höhe sowie vom Rastermaß her problemlos miteinander kombiniert werden können. Dies bedeutet, dass sie vorzugsweise direkt aneinander gesteckt werden oder aber mit Hilfe von entsprechenden Adaptern miteinander verbunden werden können. Eine solche Anordnung hat den Vorteil, dass keine zusätzlichen aufwändigen Aufbauten mit anderer Gerätebaubreite erforderlich sind, sondern die bereits vorhandenen Systemstandards verwendet werden können.

Vorteilhafte Ausführungsformen der Erfindung ergeben sich aus den Unteransprüchen.

Besonders vorteilhaft ist, wenn die Sicherung aus ihrer Betriebsposition in eine Wartungsposition überführbar ist. Hierdurch wird eine einfache galvanische Trennung für Wartungs- oder Reparaturarbeiten erreicht. Vorzugsweise ist hierzu eine manuell betätigbare oder mit einem Motorantrieb ausgestattete Einheit zum Herausschwenken oder Herausziehen der Sicherung vorgesehen. Durch eine Verriegelung zur Sicherung der Wartungsposition, beispielsweise in Form eines Schlosses, ist das Schutzgerät in einer weiteren Ausführungsform der Erfindung gegen ein unbeabsichtigtes Wiedereinschalten gesichert. Als für den Einsatz in besonders sicherheitsrelevanten Bereichen gut geeignet hat sich eine weitere Ausführungsform der Erfindung herausgestellt, bei der ein Hilfsschalter zum Melden des Sicherungszustandes vorgesehen ist. Der Hilfsschalter ist dabei vorzugsweise derart ausgeführt, dass er, beispielsweise in Verbindung mit einem Meldeelement, ein Auslösen der Sicherung anzeigt.

In einer weiteren Ausführungsform der Erfindung umfasst das erste Schutzelement ein Überlastrelais. Hierdurch wird der Motor- und Leitungsschutz auf einfache und dennoch zuverlässige Art und Weise sichergestellt. Ist die Auslösekennlinie des Motorschutzes auf die Überlastfähigkeit des elektronischen Schaltgerätes abgestimmt, ist der Einsatz eines zusätzlich zu dem elektronischen Schaltgerät vorgesehenen mechanischen Schaltgerätes zum Abschalten im Überlastfall nicht mehr erforderlich. Zudem kann durch eine Anpassung des Überlastauslöseverhaltens die Dimensionierung der Leistungshalbleiter im nachgeschalteten elektronischen Schaltgerät deutlich kostengünstiger gestaltet werden.

Das Überlastrelais kann als mechanischer Bimetallauslöser oder als elektronisch realisierte Variante mit Nachbildung einer thermischen Auslösekennlinie ausgebildet sein. Dabei spielt es keine Rolle, ob das Überlastrelais fremd- oder eigenversorgt ist.

Als besonders vorteilhaft hat sich in diesem Zusammenhang eine Überlastvariante herausgestellt, die eine Weitbereichseinstellung des Nennstromes ermöglicht. Hierdurch ist es möglich, mit einer vergleichsweise geringen Anzahl verschiedener Schutzgeräte einen großen Bereich von Motornennströmen abzudecken. Von Vorteil ist es in diesem Zusammenhang, wenn das erste Schutzelement und/oder das Einstellelement für den Nennstrom modular austauschbar ist. Somit wird eine Verwendung eines einzigen Grundgerätes für eine Vielzahl von Anwendungsfällen möglich.

Anstelle des Überlastrelais mit Bimetallauslöser kann auch ein Thermistor zur Bereitstellung der Motorschutzfunktion vorgesehen sein. Vorteilhafterweise kommen beide Schutzelemente nebeneinander zum Einsatz. Dies ist besonders dann sinnvoll, wenn auch auf solche Überhitzungssituationen reagiert werden soll, die das Überlastrelais nicht erfasst.

Die vorliegende Erfindung wird nachfolgend anhand eines Ausführungsbeispieles beschrieben, das mit Hilfe von Zeichnungen näher erläutert wird. Hierbei zeigen:
- FIG 1: eine schematische Darstellung einer Anordnung mit einem Schutzgerät und einem elektronischen Schalt- gerät,
- FIG 2: eine schematische Darstellung eines Schutzgerätes in Betriebsposition, und
- FIG 3: eine schematische Darstellung eines Schutzgerätes in Wartungsposition.

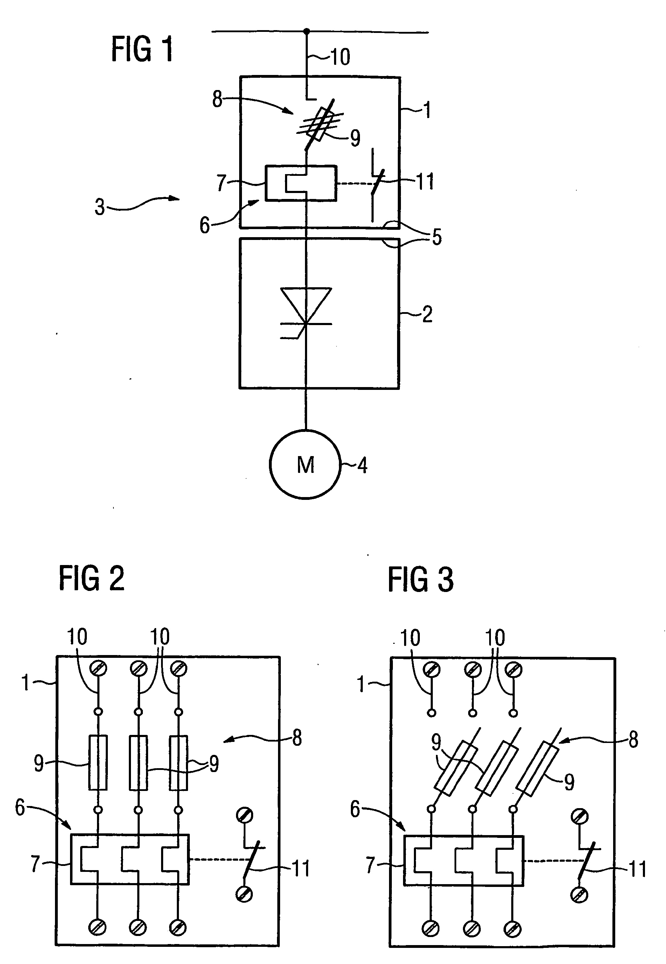

In FIG 1 ist eine Anordnung mit einem erfindungsgemäßen Schutzgerät 1 sowie einem elektronischen Schaltgerät 2 dargestellt. Der Verbraucherabzweig 3 umfasst neben dieser erfindungsgemäßen Anordnung einen Verbraucher in Form eines Motors 4.

Die Montageabmessungen von Schutzgerät 1 und Schaltgerät 2 sind aufeinander abgestimmt. Insbesondere sind die Baubreiten 5 von Schutzgerät 1 und Schaltgerät 2 gleich. Die insgesamt für die erreichten Schutzfunktionen benötigte Schaltschrankfläche ist dadurch gegenüber bekannten Lösungen verringert.

Das erfindungsgemäße Schutzgerät 1 besteht im Wesentlichen aus einem ersten Schutzelement 6 mit einem Überlastrelais 7 zur Bereitstellung eines Motor- und Leitungsschutzes und einem integrierten zweiten Schutzelement 8 mit Sicherungen 9 zur Bereitstellung eines Kurzschlussschutzes.

Erstes Schutzelement 6 und zweites Schutzelement 8, und damit sämtliche mit dem Schutzgerät 1 realisierbaren Schutzfunktionen, sind derart aufeinander abgestimmt, dass ein Anwender ohne Projektierungsaufwand ein sofort einsetzbares Gerät erhält. Die Auswahl des Schutzgerätes 1 kann anhand der Nenndaten des Motors 4 erfolgen.

Ein Einsatz des erfindungsgemäßen Schutzgerätes 1 kann auch in einer Anordnung mit mechanischen Schaltgeräten (Schütze) erfolgen (nicht abgebildet). Damit kann auch bei solchen Anordnungen die "Zuordnungsart 2" erreicht werden, bei denen dies zuvor nicht der Fall war.

FIG 2 zeigt ein erfindungsgemäßes Schutzgerät 1 in Betriebsposition in einer stark vereinfachten Darstellung, wobei eine Absicherung dreier Stromleiter 10 erfolgt.

Das erste Schutzelement 6 umfasst ein dreipoliges elektrothermisches Überlastrelais 7. Dieses dient in Verbindung mit einem Schalter 11 zum Ausschalten des im Verbraucherabzweig 3 nachgeschalteten elektronischen Schaltgerätes 2 im Fall einer Überlastung und damit zum Schutz des Schaltgerätes 2 vor Zerstörung. Hierdurch wird zum einen der Motorschutz und aufgrund der Überlastschutzfunktion für den Motor 4 gleichzeitig der Leitungsschutz bereitgestellt. Die Auslösekennlinie des Überlastrelais 7 ist dabei auf die Überlastfähigkeit des elektronischen Schaltgerätes 2 abgestimmt. Eine Überdimensionierung der Leistungshalbleiter im Schaltgerät 2 ist aufgrund der Anpassung des Überlastauslöseverhaltens des Überlastrelais 7 an das Schaltgerät 2 nicht mehr erforderlich.

Das zweite Schutzelement 8 umfasst für alle Stromleiter 10 Sicherungen 9, die derart ausgebildet sind, dass sie neben einem Kurzschlussschutz für den gesamten Verbraucherabzweig 3 zugleich auch einen Halbleiterschutz für das elektronische Schaltgerät 2 bewirken. Hierfür werden im vorliegenden Beispiel Teilbereichssicherungen vom Typ aM verwendet. Diese weisen sowohl eine geeignete Überlastfähigkeit für den Motoranlauf als auch niedrige Stromabschaltwerte zum Schutz der Halbleiter im Schaltgerät 2 auf. Die Sicherungen 9 sind dabei manuell aus ihrer Betriebsposition in eine Wartungsposition überführbar, so dass eine einfache galvanische Trennung möglich ist. Durch die geringe Baugröße der verwendeten Sicherungen 9 von 10 x 38 mm ist für das dreiphasige Schutzgerät 1 eine Baubreite von 45 mm möglich.

FIG 3 stellt ein erfindungsgemäßes Schutzgerät 1 in seiner Wartungsposition dar. Dabei sind die Sicherungen 9 aus der Betriebsposition herausgeschwenkt.

## Patentansprüche

1. Schutzgerät (1) zum Schutz eines Verbraucherabzweigs (3), mit einem ersten Schutzelement (6) zur Bereitstellung eines Motor- und Überlastschutzes und einem, eine Sicherung (9) aufweisenden zweiten Schutzelement (8) zur Bereitstellung eines Kurzschlussschutzes, **dadurch gekennzeichnet dass** die Sicherung (9) so ausgebildet ist, dass sie sowohl eine geeignete Überlastfähigkeit für den Motoranlauf als auch einen niedrigen Stromabschaltwert zum Schutz der Halbleiter eines in Reihe geschalteten und zwischen dem Schutzgerät (1) und dem Motor (4) angeordneten Halbleiterschaltgerätes (2) aufweist.

2. Schutzgerät (1) nach Anspruch 1, **dadurch gekennzeichnet, dass** die Sicherung (9) aus ihrer Betriebsposition in eine Wartungsposition überführbar ist.

3. Schutzgerät (1) nach Anspruch 2, **gekennzeichnet durch** eine Verriegelung zur Sicherung der Wartungsposition.

4. Schutzgerät (1) nach einem der Ansprüche 1 bis 3, **gekennzeichnet durch** einen Hilfsschalter zum Melden des Zustandes der Sicherung (9).

5. Schutzgerät (1) nach einem der Ansprüche 1 bis 4, **dadurch gekennzeichnet, dass** das erste Schutzelement (6) ein Überlastrelais (7) aufweist.

6. Schutzgerät (1) nach einem der Ansprüche 1 bis 5, **dadurch gekennzeichnet, dass** das Auslöseverhalten des ersten Schutzelementes (6) an die Dimensionierung eines Schaltgerätes (2) angepasst ist.

7. Verbraucherabzweig (3) mit einem Schutzgerät (1) nach einem der Ansprüche 1 bis 6 und einem in Reihe geschalteten Halbleiterschaltgerät (2).

8. Verbraucherabzweig (3) nach Anspruch 7, **dadurch gekennzeichnet, dass** das Schutzgerät (1) und das Halbleiterschaltgerät (2) einheitliche Montageabmessungen aufweisen.

## Claims

1. Protective device (1) for the protection of a load branch circuit (3), having a first protective element (6) for providing motor protection and overload protection, and a second protective element (8) comprising a fuse (9) for providing short-circuit protection, **characterized in that** the fuse (9) is designed such that it has both a suitable overload capability for the motor start-up and a low current switch-off value to protect the semiconductors of a series-connected semiconductor switching device (2) arranged between the protective device (1) and the motor (4).

2. Protective device (1) according to Claim 1, **characterized in that** the fuse (9) can be transferred from its operating position into a maintenance position.

3. Protective device (1) according to Claim 2, **characterized by** a locking mechanism for securing the maintenance position.

4. Protective device (1) according to any of Claims 1 to 3, **characterized by** an auxiliary switch for signaling the status of the fuse (9).

5. Protective device (1) according to any of Claims 1 to 4, **characterized in that** the first protective element (6) comprises an overload relay (7).

6. Protective device (1) according to any of Claims 1 to 5, **characterized in that** the trip response of the first protective element (6) is coordinated with the rating of a switching device (2).

7. Load branch circuit (3) having a protective device (1) according to any of Claims 1 to 6 and a series-connected semiconductor switching device (2).

8. Load branch circuit (3) according to Claim 7, **characterized in that** the protective device (1) and the semiconductor switching device (2) have standard installation dimensions.

## Revendications

1. Appareil ( 1 ) de protection pour la protection d'un branchement ( 3 ) d'utilisateur, comprenant un premier élément ( 6 ) de protection pour disposer d'une protection de moteur et vis-à-vis d'une surcharge, et un deuxième élément ( 8 ) de protection comportant un fusible ( 9 ) pour disposer d'une protection vis-à-vis d'un court-circuit, **caractérisé en ce que** le fusible ( 9 ) est tel qu'il a, à la fois, une capacité de surcharge appropriée pour le démarrage du moteur et une valeur basse d'interruption du courant pour la protection des semiconducteurs d'un appareil ( 2 ) de commutation à semiconducteurs, monté en série et disposé entre l'appareil ( 1 ) de protection et le moteur ( 4 ).

2. Appareil ( 1 ) de protection suivant la revendication 1, **caractérisé en ce que** le fusible ( 9 ) peut passer de sa position de fonctionnement à une position d'entretien.

3. Appareil ( 1 ) de protection suivant la revendication 2, **caractérisé par** un verrouillage pour assurer la position d'entretien.

4. Appareil ( 1 ) de protection suivant l'une des revendications 1 à 3, **caractérisé par** un commutateur auxiliaire pour indiquer l'état du fusible ( 9 ).

5. Appareil ( 1 ) de protection suivant l'une des revendications 1 à 4, **caractérisé en ce que** le premier élément ( 6 ) de protection comporte un relais ( 7 ) de surcharge.

6. Appareil ( 1 ) de protection suivant l'une des revendications 1 à 5, **caractérisé en ce que** le comportement de déclenchement du premier élément ( 6 ) de protection est adapté au dimensionnement d'un appareil ( 2 ) de commutation.

7. Branchement ( 3 ) d'utilisateur comprenant un appareil ( 1 ) de protection suivant l'une des revendications 1 à 6, et un appareil ( 2 ) de commutation à semiconducteurs monté en série.

8. Branchement ( 3 ) d'utilisateur suivant la revendication 7, **caractérisé en ce que** l'appareil ( 1 ) de protection et l'appareil ( 2 ) de commutation à semiconducteurs ont des dimensions de montage unitaires.
